# DEMANDE DE BREVET EUROPEEN

(11) **EP 1 821 034 A1**
(43) Date de publication de la demande: **22.08.2007**
(21) Numéro de dépôt: 07370004.9
(22) Date de dépôt: 13.02.2007
(51) Int. Cl.: F21V 8/00

(54) **Panneau lumineux, notamment destiné pour la réalisation d'enseignes commerciales ou autres**

(30) Priorité: 21.02.2006 FR 0601510
(71) Demandeur: Dhainaut, Jérémy, 59283 Raimbeaucourt (FR); Driesens, Christophe, 59700 Marcq-En-Baroeul (FR)
(72) Inventeur: Dhainaut, Jérémy, 59283 Raimbeaucourt (FR); Driesens, Christophe, 59700 Marcq-En-Baroeul (FR)
(74) Mandataire: Duthoit, Michel Georges André

(57) **Abrégé**

L'invention est relative à un panneau lumineux (1), notamment destiné pour la réalisation d'enseignes commerciales ou autres, présentant au moins une face externe (2), destinée à être vue, ledit panneau comprenant :
- au moins une source de lumière (4),
- un guide de lumière se présentant sous la forme d'un élément plat (5) constitué d'un matériau conducteur de la lumière, présentant, d'une part, deux surfaces dites extérieures (6), ou encore, une surface dite extérieure (6) et une surface dite intérieure (7) et, d'autre part, au moins un bord libre (8), visible, sur tout ou partie de sa périphérie,
- la source de lumière (4) étant couplée audit guide de lumière, à distance dudit bord libre (8) et disposée de telle façon qu'une partie au moins du flux de lumière émis par ladite source de lumière s'étende dans ledit élément plat (5), en direction de sa périphérie,
- ledit bord libre (8) de l'élément plat étant prévu pour lui conférer un effet de prisme, de telle façon que les rayons incidents (9) transmis par le guide de lumière soient déviés, pour la plupart d'entre eux.

## Description

L'invention concerne un panneau lumineux, notamment destiné pour la réalisation d'enseignes commerciales ou autres, présentant au moins une face externe destinée à être vue.

Dans le domaine des enseignes commerciales, on connaît notamment du document WO-2005/06/7570 une enseigne présentant une surface arrière, des surfaces de côté et une surface avant destinée à être vue. L'enseigne est constituée par une plaque, dans un matériau solide, et constitue un guide de lumière. Une cavité formée sur la surface arrière de l'enseigne est prévue pour recevoir un module d'émission de lumière. Ce dernier émet de la lumière qui se propage globalement dans le plan du panneau.

La surface avant de l'enseigne est ainsi illuminée uniformément par la lumière provenant des modules.

Le but de la présente invention est de proposer une évolution de ce type de panneau, illuminé intérieurement, permettant des effets de lumière et notamment une sur-illumination de la périphérie de l'enseigne.

Un autre but de l'invention est de proposer une enseigne présentant deux faces externes destinées à être vues.

Un autre but de l'invention est de proposer un panneau lumineux présentant des dispositions pour le refroidissement d'une source de lumière disposée intérieurement.

Un autre but de l'invention est de proposer un panneau lumineux permettant un éclairage direct ou un éclairage indirect.

Un autre but de l'invention est de proposer un agencement lumineux résultant de l'assemblage de deux panneaux.

D'autres buts et avantages de la présente invention apparaîtront au cours de la description qui va suivre qui n'est donnée qu'à titre indicatif et qui n'a pas pour but de la limiter.

L'invention concerne un panneau lumineux, notamment destiné pour la réalisation d'enseignes commerciales ou autres, présentant au moins une face externe destinée à être vue, ledit panneau comprenant :
- au moins une source de lumière,
- un guide de lumière se présentant sous la forme d'un élément plat constitué d'un matériau conducteur de la lumière, présentant d'une part, deux surfaces dites extérieures, ou encore une surface dite extérieure et une surface dite intérieure, et d'autre part au moins un bord libre, notamment visible, sur tout ou partie de sa périphérie,
- ladite source de lumière étant couplée audit guide de lumière, à distance dudit bord libre et disposée de telle façon qu'une partie au moins du flux de lumière émis par la source de lumière s'étende dans ledit élément plat, en direction de sa périphérie,
- le bord libre de l'élément plat étant prévu pour lui conférer un effet de prisme, de telle façon que les rayons incidents transmis par le guide de lumière soient déviés, pour la plupart d'entre eux.

L'invention concerne également un agencement lumineux constitué par deux panneaux lumineux, chacun des panneaux présentant :
- au moins une source de lumière,
- un guide de lumière se présentant sous la forme d'un élément plat constitué d'un matériau conducteur de lumière présentant une surface dite extérieure et une surface dite intérieure et au moins un bord libre visible, sur tout ou partie de sa périphérie,
- ladite source de lumière étant couplée audit guide de lumière à distance dudit bord libre et disposée de telle façon qu'une partie au moins du flux de lumière émis par la source de lumière s'étende dans ledit élément plat, en direction de sa périphérie,
l'agencement lumineux résulte de l'assemblage des deux panneaux accolés, dos à dos, au niveau de la surface intérieure de leur élément plat respectif.

L'invention sera mieux comprise à la lecture de la description suivante, accompagnée des dessins en annexe, parmi lesquels :
- la figure 1 est une vue de coupe d'un panneau lumineux conforme à l'invention selon un premier mode de réalisation,
- la figure 2 est une vue de face du panneau lumineux tel qu'illustré à la figure 1,
- la figure 3 est une vue de coupe d'un panneau lumineux conforme à l'invention selon un second mode de réalisation,
- la figure 4 est une vue de coupe d'un panneau lumineux conforme à l'invention selon un troisième mode de réalisation,
- la figure 5 est une vue de coupe d'un panneau conforme à l'invention selon un quatrième mode de réalisation,
- la figure 6 est une vue de coupe d'un agencement lumineux conforme à l'invention résultant de l'assemblage de deux panneaux lumineux,
- la figure 7 est une vue de coupe d'un panneau lumineux présentant deux faces externes destinées à être vues et conformes à l'invention selon un cinquième mode de réalisation,
- la figure 8 est une vue de coupe d'un panneau lumineux conforme à l'invention selon un sixième mode de réalisation, et permettant un éclairage indirect.

L'invention concerne un panneau lumineux 1, notamment destiné pour la réalisation d'enseignes commerciales ou autres, présentant au moins une face externe 2 destinée à être vue.

Ledit panneau 1 comprend au moins une source de lumière 4, et un guide de lumière se présentant sous la forme d'un élément plat 5.

Ledit élément plat 5 est constitué d'un matériau conducteur de la lumière, définissant notamment un plan P de propagation d'ondes visibles, présentant d'une part, deux surfaces dites extérieures 6, ou encore, une surface dite extérieure 6 et une surface dite intérieure 7, et d'autre part, au moins un bord libre 8, notamment visible, sur tout ou partie de sa périphérie,

Par face externe, on entend la face du panneau lumineux destinée à être vue.

Par surface extérieure, on entend la surface de l'élément plat tournée vers la ou l'une des faces externes du panneau.

Par surface intérieure, on entend, pour un panneau lumineux présentant une unique face externe destinée à être vue, la surface de l'élément plat tournée vers la face cachée dudit panneau lumineux.

Ladite source de lumière 4 est couplée audit guide de lumière, à distance dudit bord libre 8 et disposée de telle façon qu'une partie au moins du flux de lumière émis par ladite source de lumière s'étende dans ledit élément plat, notamment parallèlement au plan de propagation P, en direction de sa périphérie.

Le bord 8 de l'élément plat est prévu pour lui conférer un effet de prisme, de telle façon que les rayons incidents 9 transmis par le guide de lumière soient déviés notamment par réflexion, pour la plupart d'entre eux, notamment perpendiculairement au plan de propagation P de l'élément plat 5.

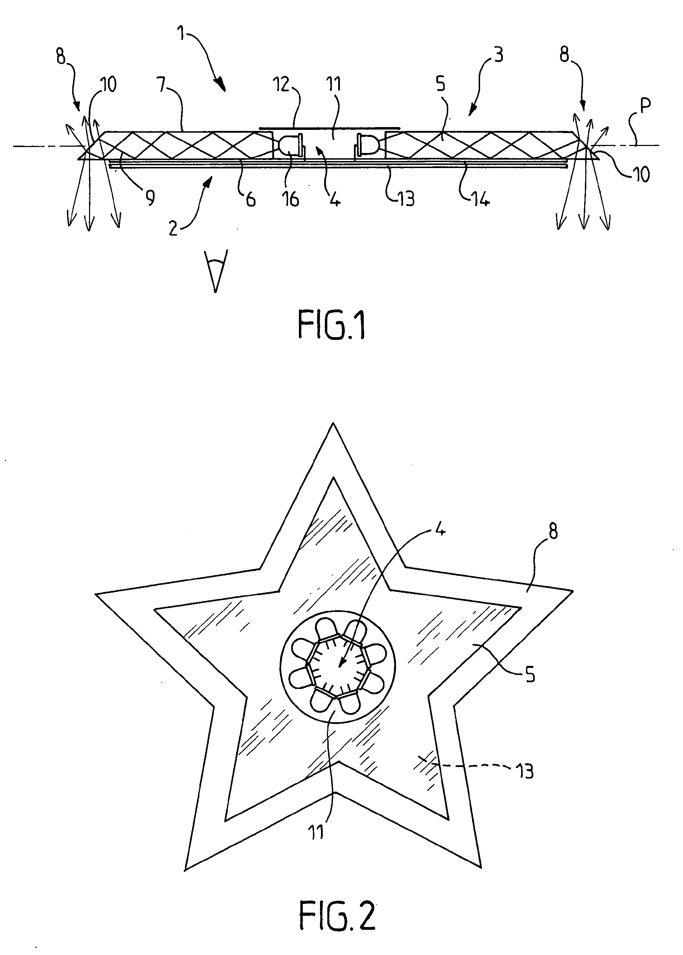

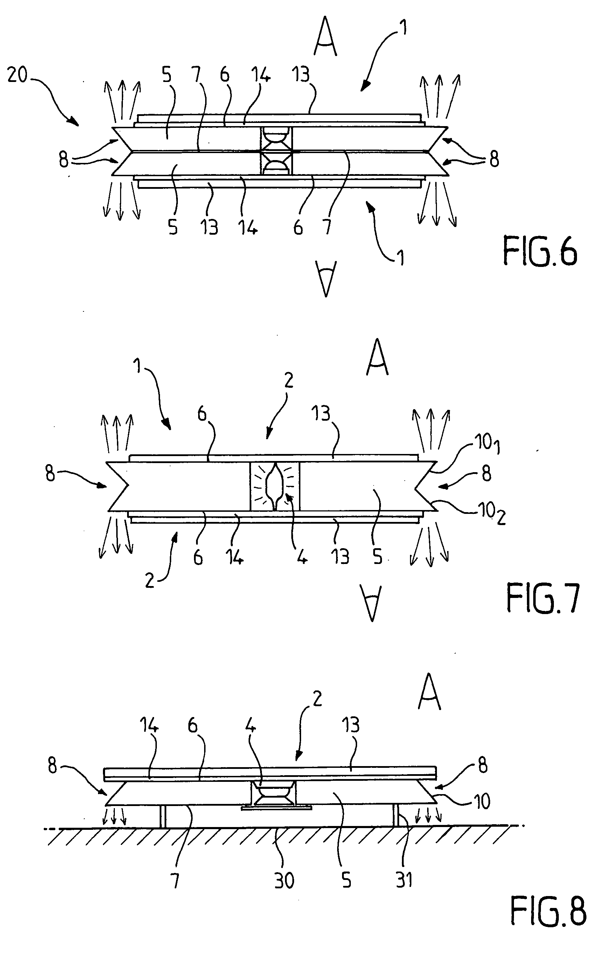

Selon les modes de réalisation illustrés aux figures 1 à 7, le panneau permet un éclairage direct. Selon un mode de réalisation illustré à la figure 8, le panneau permet un éclairage indirect par rétroéclairage.

Ledit élément plat 5 peut se présenter sous la forme d'une plaque translucide ou encore transparente, et réalisée dans un matériau plastique, notamment un polymère tel que le polyméthacrylate de méthyl (PMMA). Aussi, le bord libre 8 présente des moyens pour lui conférer un effet de prisme. Ces moyens se présentent notamment sous la forme d'au moins un pan oblique 10 reliant la surface extérieure 6 et intérieure 7 dudit élément plat 5, telles qu'illustrées à la figure 1, ou encore les deux faces extérieures 6 de l'élément plat 5, telles qu'illustrées à la figure 7.

Les moyens pour conférer audit bord libre 8 un effet de prisme peuvent également prendre la forme d'un chant de l'élément plat 5 de profil courbe, à savoir convexe ou concave, ou encore sous la forme d'un chant de l'élément plat 5 de profil en marches d'escalier.

Tel qu'illustré aux figures 1 à 5, le panneau 1 présente une unique face externe 2, l'élément plat constituant le guide de lumière présentant une surface extérieure 6 et une surface intérieure 7. Le panneau peut alors présenter un unique pan oblique formant un angle de 45 °, par exemple, avec la surface extérieure 6 de l'élément plat 5. Ce pan oblique permet de réfléchir, en tout ou partie, les rayons incidents se propageant dans l'élément plat 5 et de les dévier dans une direction sensiblement perpendiculaire.

Tel qu'illustré à la figure 7, selon une autre variante, le panneau présente deux faces externes 2 destinées à être vues, l'élément plat 5 présentant deux surfaces extérieures 6. Le panneau, notamment l'élément plat, peut alors présenter, deux pans obliques 10₁ et 10₂ sur l'épaisseur, notamment sur la tranche de l'élément plat 5. Chaque pan oblique forme un angle de 45 °, par exemple, avec l'une des surfaces extérieures 6 dudit élément. La lumière peut ainsi être déviée suivant deux sens opposés.

Tel qu'illustré à la figure 8, le panneau 1 présente une unique face externe 2 destinée à être vue, l'élément plat constituant le guide de lumière présentant une surface extérieure 6 et une surface intérieure 7.

Le panneau peut alors présenter un unique pan oblique 10 formant un angle de 45 °, par exemple, avec la surface intérieure 7 de l'élément plat 5.

Avantageusement, la surface translucide ou opaque du pan oblique 8 peut être recouverte d'un enduit ou d'un revêtement, notamment d'une peinture de couleur blanche.

Tel qu'illustré aux figures, ledit élément plat 5 présente au moins une cavité 11 constituant un logement pour la réception de ladite source de lumière 4.

Telle qu'illustrée à la figure 5 notamment, la cavité 11 est formée sur la surface extérieure 6 dudit élément plat 5. Selon ce mode de réalisation, la source de lumière peut être insérée dans la cavité 11 à partir de la surface extérieure dudit élément plat 5.

Telle qu'illustrée aux figures 1 à 4 notamment, la cavité 11 de l'élément plat est traversante. Une rondelle d'étanchéité 12 est alors prévue pour fermer l'une des extrémités débouchantes de la cavité, notamment l'extrémité débouchante sur la surface intérieure 7 de l'élément plat 5.

Par ailleurs, un masque obturateur 13 peut constituer, en tout ou partie, ladite face externe du panneau 1 et recouvrir ladite surface extérieure 6 de l'élément plat 5, en tout ou partie.

Selon les modes de réalisation illustrés aux figures 1 à 7, en cas d'éclairage direct, le masque obturateur 13 recouvre en partie la surface extérieure 6 de l'élément plat 5 à l'exception dudit bord libre 8.

Selon un autre mode de réalisation illustré à la figure 8, notamment en cas d'éclairage indirect, le masque obturateur peut recouvrir toute la surface extérieure 6 de l'élément plat, bord libre 8 inclus. La surface intérieure 7 de l'élément plat 5 est notamment située à distance d'une paroi 30, notamment d'un mur, par l'intermédiaire d'entretoises 31. Le bord libre 8 permet alors de dévier les rayons incidents transmis par l'élément plat en direction de la paroi 30 pour obtenir une illumination par rétroéclairage.

Avantageusement, le masque obturateur 13 permet de fermer la cavité 11, notamment l'ouverture débouchante sur la surface extérieure 6 de l'élément plat 5. Le masque obturateur 13 peut d'ailleurs constituer, simultanément, un élément dissipateur d'énergie thermique prévu pour refroidir ladite source de lumière 4, pouvant notamment se présenter sous la forme d'une feuille ou une plaque d'aluminium. La feuille ou la plaque d'aluminium pourra notamment être laquée, et présenter différentes teintes ou couleurs.

Un circuit d'alimentation électrique 14 de ladite au moins une source de lumière 4 pourra être prévu, inséré entre ledit élément plat 5 et le masque obturateur 13.

L'élément dissipateur permet, le cas échéant, de refroidir d'autres composants électriques de régulation, notamment du circuit d'alimentation électrique 14.

La source de lumière 4 peut se présenter sous la forme d'au moins une diode luminescente 16 ou encore d'une lampe incandescente 17.

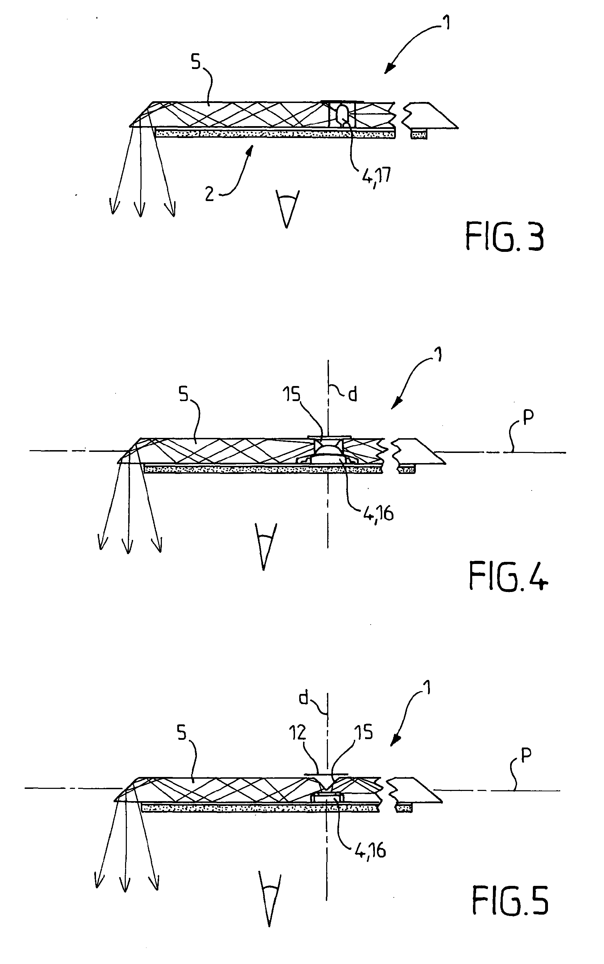

Telle qu'illustrée aux figures 4 et 5 notamment, la source de lumière 4 émet de la lumière principalement dans une direction « d » perpendiculaire au plan de l'élément plat, notamment audit plan de propagation P. Le panneau présente en outre un cône réflecteur 15 permettant de dévier les rayons incidents émis par la source lumineuse 4, notamment à 360 °, dans une direction transversale, parallèle audit plan de l'élément plat 5, notamment audit plan de propagation P.

Telle qu'illustrée à la figure 4, la source lumineuse 4 est constituée par une diode 16 intégrant le cône réflecteur 15. Selon une autre variante illustrée à la figure 5, la source lumineuse 4 est constituée par une diode 16 émettant de la lumière principalement dans la direction « d », perpendiculaire au plan de l'élément plat 5. Le cône réflecteur 15 est alors réalisé dans l'élément plat 5, notamment par usinage d'un alésage conique et dont la surface interne peut être recouverte d'un revêtement ou d'un enduit réfléchissant.

Selon une autre variante illustrée aux figures 1 et 2 notamment, la source lumineuse 4 est constituée par plusieurs diodes luminescentes 16 logées dans une cavité 11 de l'élément plat 5. Chaque source lumineuse 4 présente un axe principal d'émission de lumière, disposé parallèlement audit élément plat 5, notamment au plan de propagation P. Les diodes luminescentes sont disposées de telle façon à former un cercle pour produire un éclairage à 360 °, tel qu'illustré à la figure 2.

II est d'ailleurs à préciser que la figure 2 est une vue de l'esprit, la source de lumière 4, notamment le cercle de diodes devant théoriquement ne pas être visible, car situé sous le plan du masque obturateur 13.

Le panneau trouvera une application particulière pour la réalisation d'enseignes, dont le contour est sur-illuminé, et trouvera notamment une application spécifique pour la réalisation de lettres, de sigles lumineux, de logo types, de pictogrammes, symboles ou autres motifs.

L'invention concerne également un agencement lumineux 20 notamment tel qu'illustré à la figure 6, constitué par l'assemblage de deux panneaux lumineux 1. Chacun des panneaux présente au moins une source de lumière 4, et un guide de lumière se présentant sous la forme d'un élément plat 5.

Ledit élément plat 5 est constitué d'un matériau conducteur de la lumière présentant une surface dite extérieure 6 et une surface dite intérieure 7 et au moins un bord libre 8, visible, sur tout ou partie de sa périphérie,

La source de lumière 4 est couplée audit guide de lumière, à distance dudit bord libre 8, et disposée de telle façon qu'une partie au moins du flux de lumière émis par ladite source de lumière s'étende dans ledit élément plat 5, en direction de sa périphérie,

Le bord libre 8 de l'élément plat 5 est prévu pour lui conférer un effet de prisme, de telle façon que les rayons incidents 9 transmis par le guide de lumière soient déviés, pour la plupart d'entre eux.

L'agencement lumineux résulte de l'assemblage des deux panneaux 1 accolés, dos à dos, au niveau de la surface intérieure 7 de leur élément plat respectif.

Naturellement, d'autres modes de réalisation et/ou d'autres applications, à la portée de l'homme de l'art, auraient également pu être envisagés, sans pour autant sortir du cadre de l'invention.

## Revendications

1. Panneau lumineux (1), notamment destiné pour la réalisation d'enseignes commerciales ou autres, présentant au moins une face externe (2) destinée à être vue, ledit panneau comprenant :
- au moins une source de lumière (4),
- un guide de lumière se présentant sous la forme d'un élément plat (5) constitué d'un matériau conducteur de la lumière, présentant, d'une part, deux surfaces dites extérieures (6), ou encore, une surface dite extérieure (6) et une surface dite intérieure (7) et, d'autre part, au moins un bord libre (8) sur tout ou partie de sa périphérie,
- ladite source de lumière (4) étant couplée audit guide de lumière, à distance dudit bord libre (8) et disposée de telle façon qu'une partie au moins du flux de lumière émis par ladite source de lumière s'étende dans ledit élément plat (5), en direction de sa périphérie,
- ledit bord libre (8) de l'élément plat étant prévu pour lui conférer un effet de prisme, de telle façon que les rayons incidents (9) transmis par le guide de lumière soient déviés, pour la plupart d'entre eux, **caractérisé en ce qu'**un masque obturateur (13), constitue en tout ou partie, ladite face externe (2) du panneau et recouvre ladite surface extérieure (6) de l'élément plat (5), en tout ou partie.

2. Panneau selon la revendication 1, dans lequel le masque obturateur (13) recouvre en partie la surface extérieure (6) de l'élément plat (5), à l'exception dudit bord libre (8).

3. Panneau selon la revendication 1 ou 2, dans lequel le masque obturateur (13) constitue simultanément un élément dissipateur d'énergie thermique prévu pour refroidir ladite source de lumière (4).

4. Panneau selon l'une des revendications 1 à 3, dans lequel ledit bord libre (8) présente au moins un pan oblique (10, 10₁, 10₂) reliant la surface extérieure (6) et intérieure (7) dudit élément plat (5) ou encore les deux surfaces extérieures (6) de l'élément plat.

5. Panneau selon la revendication 4, dans lequel la surface translucide ou opaque du pan oblique (8) est recouverte d'un enduit ou d'un revêtement.

6. Panneau lumineux selon l'une des revendications 1 à 5, dans lequel ledit élément plat (5) présente au moins une cavité (11) constituant un logement pour la réception de ladite source de lumière (4).

7. Panneau selon l'une des revendications 1 et 3 à 6, dans lequel le masque obturateur (13) recouvre toute la surface extérieure (6) de l'élément plat (5), bord libre inclus, la surface intérieure (7) de l'élément plat (5) pouvant être positionnée à distance d'une paroi par l'intermédiaire d'entretoises (31), le bord libre (8) conçu pour dévier les rayons incidents en direction de ladite paroi.

8. Panneau selon l'une des revendications 1 à 7, dans lequel la source de lumière (4) émet de la lumière principalement dans une direction (d) perpendiculaire au plan de l'élément plat (5), le panneau présentant en outre un cône réflecteur (15), constitué par un alésage conique dans l'élément plat (5) recouvert par un enduit réfléchissant, permettant de dévier les rayons incidents émis par la source lumineuse (4) dans une direction transversale parallèle audit plan de l'élément plat.

9. Panneau selon l'une des revendications 1 à 8, dans lequel la source de lumière (4) se présente sous la forme d'au moins une diode luminescente (16) ou encore d'une lampe incandescente (17).

10. Agencement lumineux (20) constitué par deux panneaux lumineux selon la revendication 1, chacun des panneaux présentant :
- au moins une source de lumière (4),
- un guide de lumière se présentant sous la forme d'un élément plat (5) constitué d'un matériau conducteur de la lumière présentant une surface extérieure (6) et une surface intérieure (7) et au moins un bord libre (8), visible, sur tout ou partie de sa périphérie,
- ladite source de lumière (4) étant couplée audit guide de lumière, à distance dudit bord libre (8) et disposée de telle façon qu'une partie au moins du flux de lumière émis par ladite source de lumière s'étende dans ledit élément plat (5), en direction de sa périphérie,
- ledit bord libre (8) de l'élément plat étant prévu pour lui conférer un effet de prisme, de telle façon que les rayons incidents (9) transmis par le guide de lumière soient déviés, pour la plupart d'entre eux,
l'agencement lumineux résultant de l'assemblage des deux panneaux, accolés, dos à dos, au niveau de la surface intérieure (7) de leur élément plat (5) respectif.
